# EUROPÄISCHE PATENTSCHRIFT

(11) **EP 1 327 060 B1**
(45) Veröffentlichungstag und Bekanntmachung des Hinweises auf die Patenterteilung: **09.06.2004**
(21) Anmeldenummer: 01982176.8
(22) Anmeldetag: 02.10.2001
(51) Int. Cl.: F01N 3/20

(54) **VORRICHTUNG ZUR BILDUNG EINES REDUKTIONSMITTEL-ABGAS-GEMISCHES UND ABGASREINIGUNGSANLAGE**
DEVICE FOR PRODUCING A REDUCING AGENT/EXHAUST GAS MIXTURE AND EXHAUST GAS PURIFICATION SYSTEM
DISPOSITIF PERMETTANT LA FORMATION D'UN MELANGE AGENT REDUCTEUR-GAZ D'ECHAPPEMENT ET SYSTEME DE PURIFICATION DE GAZ D'ECHAPPEMENT

(30) Priorität: 04.10.2000 DE 10048921
(43) Veröffentlichungstag der Anmeldung: 16.07.2003
(73) Patentinhaber: ROBERT BOSCH GMBH, 70442 Stuttgart (DE)
(72) Erfinder: MAHR, Bernd, 73207 Plochingen (DE)
(86) Internationale Anmeldenummer: PCT/DE2001/003786
(87) Internationale Veröffentlichungsnummer: WO 2002/029219

(56) Entgegenhaltungen:
- EP-A- 0 218 047
- EP-A- 0 779 415
- DE-A- 19 834 541
- US-A- 5 753 188
- PATENT ABSTRACTS OF JAPAN vol. 1998, no. 12, 31. Oktober 1998 (1998-10-31) & JP 10 185125 A (OSAKA GAS CO LTD;MAEDA TEKKOSHO:KK), 14. Juli 1998 (1998-07-14)
- PATENT ABSTRACTS OF JAPAN vol. 1995, no. 02, 31. März 1995 (1995-03-31) & JP 06 330765 A (ISHIKAWAJIMA HARIMA HEAVY IND CO LTD), 29. November 1994 (1994-11-29)

## Beschreibung

### Stand der Technik

Die vorliegende Erfindung betrifft eine Vorrichtung zur Bildung eines Reduktionsmittel-Abgas-Gemisches nach dem Oberbegriff des Patentanspruchs 1 sowie eine Abgasreinigungsanlage nach dem Oberbegriff des Patentanspruchs 4.

Abgasreinigungsanlagen insbesondere zur Reduzierung von Stickoxiden (NOₓ) im Abgas von Dieselmotoren sind bekannt. Eine derartige Abgasreinigungsanlage ist beispielsweise in der DE 197 31 865 C2 beschrieben. Eine hierbei verwendete Katalysatoranordnung weist einen Oxidationskatalysator auf, in dem zunächst das im Abgas vorhandene NO in NO₂ umgewandelt wird. In einer nachfolgenden Speicherkomponente werden die Stickoxide dann beispielsweise als Bariumnitrat gespeichert. Um die Speicherkomponente über lange Zeit funktionstüchtig zu erhalten, ist es vorteilhaft, diese von Zeit zu Zeit zu regenerieren. Für diese Regeneration ist es erforderlich, im Abgasstrom sogenannte Fettphasen zu realisieren, d. h. den Abgasstrom mit einem geeigneten Reduktionsmittel zu beaufschlagen. Die Anfettung kann beispielsweise durch Beimischen von Kraftstoff (HC) realisiert werden. Die Fettphasen lassen sich innermotorisch im unteren Drehzahl- und Lastbereich darstellen. Bei höheren Drehzahlen und Drehmomenten ist dies ohne Inkaufnahme von Nachteilen nur mit beispielsweise einer externen Zudosierung von Reduktionsmittel möglich. Eine Nacheinspritzung von Reduktionsmittel mit hohen Einspritzdrücken in den Brennraum hat hierbei den Nachteil der Ölverdünnung. Eine Zudosierung mit einer Einspritzdüse direkt in den Abgastrakt und Vorwärmung des Kraftstoffes, z. B. mit einer Glühkerze, hat wegen zu niedriger Temperatur des Kraftstoffs und unzureichender Aufbereitung bisher keine zufriedenstellenden Ergebnisse gebracht.

Eine ähnliche Abgasreinigungsanlage ist auch in der EP 0 779 415 A beschrieben.

Es hat sich als nachteilig erwiesen, daß bei Überdosierung mit Reduktionsmitteln bei einem SCR-Katalysator unerwünschte Abgaskomponenten auftreten. Das Entstehen derartiger Nebenprodukte wird unter anderem auch durch eine unvollständige Aerosolbildung des Reduktionsmittels in dem Abgas verursacht. Es wurde in diesem Zusammenhang versucht, Mischer, beispielsweise sogenannte Sulzer-Mischer, im Abgastrakt zur Verbesserung der Aerosolbildung zu positionieren. Da jedoch der Abgasvolumenstrom beim Dieselmotor in hohem Maße von der Motordrehzahl und Motorlast abhängig ist, müssen derartige Mischer mit steuerbaren Schaufeln bzw. Drallerzeugern versehen werden, wobei festzustellen ist, daß derartige Steuerungen relativ aufwendig in Bereitstellung und Wartung sind. Bei nichtsteuerbaren Mischern kann es andererseits bei hohen Strömungsgeschwindigkeiten aufgrund eines zu hohen erzeugten Dralls zu einer Entmischung von Reduktionsmittel und Abgas kommen, so daß das Reduktionsmittel auf der Wandung des Abgasrohres abgeschieden wird.

Aufgabe der Erfindung ist die Schaffung einer Vorrichtung, mit der eine Verbesserung der Bildung eines

Reduktionsmittel-Abgas-Gemisches in einer Abgasreinigungsanlage in einfacher Weise erzielt werden kann.

Diese Aufgabe wird gelöst durch eine Vorrichtung mit den Merkmalen des Patentanspruchs 1 sowie eine Abgasreinigungsanlage mit den Merkmalen des Patentanspruchs 5.

Erfindungsgemäß ist nun ein Abgasreinigungssystem zur Verfügung gestellt, welches mit einfachen Mitteln eine gegenüber herkömmlichen Systemen verbesserte Reduktionsmittel-Abgas-Gemischaufbereitung ermöglicht. Die Erfindung ist insbesondere im Zusammenhang mit Harnstoff-Dosiersystemen für SCR-Katalysatoren bei Dieselmotoren einsetzbar. Erfindungsgemäß ist eine sehr gute Gemischaufbereitung über einen weiten Kennfeldbereich des Dieselmotors erzielbar, welche insbesondere für NOₓ-Speicherkatalysatoren von Bedeutung ist. Mit dem System wird über den gesamten Kennfeldbereich eine gleichmäßige Vermischung des Reduktionsmittels in dem Abgastrakt erzielt, wobei auf einen zusätzlichen Mischer bzw. Drallerzeuger, welcher den Nachteil der Erzeugung eines hohen Abgasgegendrucks aufweist, verzichtet werden kann. Die erfindungsgemäße Vorrichtung zeichnet sich durch ihre sehr preiswerte Bereitstellungsmöglichkeit aus, und stellt ohne die Notwendigkeit einer aufwendigen Steuerung die Möglichkeit eines mit dem Abgasvolumenstrom veränderlichen Drall- bzw. Turbulenzfeldes zur Verfügung. Die erfindungsgemäße Vorrichtung bzw. die erfindungsgemäße Abgasreinigungsanlage baut sehr kompakt.

Vorteilhafte Ausgestaltungen der erfindungsgemäßen Vorrichtung sind Gegenstand der Unteransprüche.

Gemäß einer ersten bevorzugten Ausführungsform ist der Gemischbildungsbereich als Rohr, welches wenigstens zum Teil als Wellrohr ausgebildet ist, vorgesehen. Ein derartiges Wellrohr bzw. ein derartiger Wellrohrbereich ist in einfacher Weise herstellbar und wirkt in effektiver Weise als Turbulenzerzeuger. Die Verwendung eines Wellrohrs trägt auch in effektiver Weise zur Entkopplung von Schwingungen innerhalb des Abgastraktes bei.

Zweckmäßigerweise ist ein Ende des Rohres nahe an einem Abgas-Austritt einer Turbine eines Abgasturboladers positioniert. Eine derartige Turbine erzeugt ebenfalls ein Turbulenzfeld, welches mit dem durch das Wellrohr geschaffenen weiteren Turbulenzfeld in vorteilhafter Weise zusammenwirkt.

Es ist bevorzugt, daß die Zufuhr des Reduktionsmittels in den Gemischbildungsbereich mittels eines mit einem Sprühkopf ausgebildeten Sprührohres erfolgt. Eine derartige Anordnung ist in einfacher Weise an einer gewünschten Position innerhalb des Gemischbildungsbereiches bzw. des Abgastraktes positionierbar.

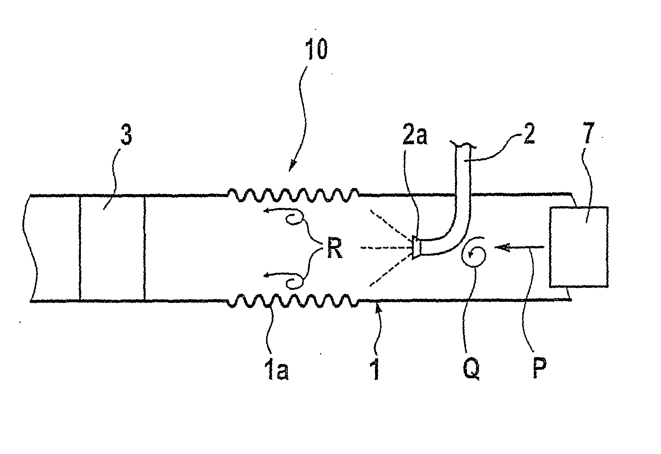

Eine bevorzugte Ausführungsform der erfindungsgemäßen Vorrichtung wird nun anhand der beigefügten Zeichnung weiter erläutert. In dieser zeigt
die einzige Figur eine schematische seitliche Schnittansicht einer bevorzugten Ausführungsform der erfindungsgemäßen Vorrichtung bzw. der erfindungsgemäßen Abgasreinigungsanlage.

In der einzigen Figur ist eine erfindungsgemäße Abgasreinigungsanlage insgesamt mit 10 bezeichnet. Die Anlage weist einen als Rohr 1 ausgebildeten Gemischbildungsbereich auf, in dem Abgas, dessen Strömungsrichtung durch den Pfeil P symbolisiert ist, aus der Turbine eines (rein schematisch dargestellten) Abgasturboladers mit einem Reduktionsmittel, welches über ein Sprührohr 2 in das Rohr 1 eingeführt wird, vermischt wird. Das Sprührohr 2 ist zweckmäßigerweise mit einem Sprühkopf 2a ausgebildet, welcher eine Verteilung des Reduktionsmittels über einen möglichst großen Raumwinkelbereich, wie mittels der gestrichelten Linien angedeutet ist, bewirkt. Der der Aufbereitung des aus dem Sprührohr 2 austretenden Reduktionsmittelstrahls dienende Sprühkopf 2a ist beispielsweise als Einfach- oder Mehrfachdüse ausgebildet.

Das so gebildete Reduktionsmittel-Abgas-Gemisch wird einer nachfolgenden Katalysatoranordnung 3 zugeführt, in welcher dann die gewünschte Abgasnachbehandlung bzw. -reinigung erfolgt. Die Katalysatoranordnung 3 kann insbesondere einen für Dieselmotoren geeigneten DeNOx-Katalysator, z. B. einen SCR-Katalysator umfassen, wobei in diesem Fall zweckmäßigerweise Harnstoff als Reduktionsmittel über das Sprührohr 2 zudosiert wird. Auch andere Arten von Katalysatoren können verwendet werden, auf die hier nicht näher eingegangen werden soll.

Es wird zur Bereitstellung eines optimalen Reduktionsmittel-Abgas-Gemisches eine vollständige Aerosolbildung des Reduktionsmittels nach seinem Austritt aus dem Sprührohr 2 (bzw. dem Sprühkopf 2a ) angestrebt. Es erweist sich nämlich, daß bei unvollständiger Aerosolbildung die entstehenden Tröpfchen durch die Fliehkräfte im Drallfeld der Turbine des Abgasturboladers 7(mittels des Drehpfeiles Q symbolisiert) nach außen, d. h. in Richtung der Wandung des Rohres 1 bewegt werden. Hierbei kann es dazu kommen, daß aus dem Rohr ausgetretenes Reduktionsmittel, wie erwähnt beispielsweise Harnstoff-Wasser-Lösung, ohne Aerosolbildung, an der Wandung des Rohres anhaftet. Zur Kompensation dieses Effektes ist das Rohr 1 wenigstens teilweise mit einem als Wellrohr 1a ausgebildeten Bereich vorgesehen. Mittels eines derartigen Wellrohrbereiches werden weitere Turbulenzen im Randschichtbereich des Rohres erzeugt, welche dazu beitragen, eventuell an der Wandung anhaftendes Reduktionsmittel (z. B., Harnstoff-Wasser-Lösung) abzuschleudern und mit dem das Rohr durchströmenden Abgas zu vermischen.

Es sei angemerkt, daß dieser Effekt insbesondere bei größeren Abgasvolumenströmen vorteilhaft ist, da in diesem Fall die hohe Abgasgeschwindigkeit zu einer Verminderung der Eindringtiefe des Reduktionsmittelaerosols, welches aus dem Sprührohr 2 austritt, führt. Durch das erfindungsgemäß zur Verfügung gestellte ausgeprägtere Drall- bzw. Turbulenzfeld kann diese Verminderung der Eindringtiefe kompensiert werden, so daß es insgesamt zu einer besseren Vermischung des Reduktionsmittels mit dem Abgas kommt. Das erfindungsgemäß vorgestellte System weist den weiteren Vorteil auf, daß es ohne eine nennenswerte Erhöhung des Abgasgegendruckes arbeitet. Der Vollständigkeit halber sei erwähnt, daß es möglich ist, einen geringfügigen zusätzlichen Drall mit Hilfe von in dem Rohr 1 angeordneten Leitschaufeln zu erzeugen.

Es sei schließlich darauf hingewiesen, daß die Katalysatoranordnung 3 auch einen Hydrolysekatalysator umfassen kann, der mit dem Gemischbildungsbereich eine Einheit bilden, oder im hinteren bzw. stromabwärtigen Bereich des Abgassystems vor einem SCR-Katalysator angeordnet sein kann.

## Patentansprüche

1. Vorrichtung zur Bildung eines Reduktionsmittel-Abgas-Gemisches mit einem Gemischbildungsbereich (1), in das ein Abgas und ein Reduktionsmittel einführbar sind, **dadurch gekennzeichnet, daß** die Wandung des Gemischbildungsbereiches (1) wenigstens teilweise mit Erhebungen und Vertiefungen, insbesondere gewellt, ausgebildet ist, wobei als Gemischbildungsbereich ein Rohr (1), welches wenigstens teilweise als Wellrohr (1a) ausgebildet ist, vorgesehen ist.

2. Vorrichtung nach Anspruch 1, **dadurch gekennzeichnet, daß** ein Ende des Rohres (1) am Abgas-Austritt einer Turbine (5a) eines Abgasturboladers (5) angeordnet ist.

3. Vorrichtung nach einem der vorstehenden Ansprüche, **dadurch gekennzeichnet, daß** die Zufuhr des Reduktionsmittels mittels eines mit einem Sprühkopf (2a) ausgebildeten Sprührohrs (2), wobei der Sprühkopf insbesondere mittig in dem Rohr (1) positioniert ist, erfolgt.

4. Abgasreinigungsanlage, insbesondere für einen Dieselmotor, mit einer Katalysatoranordnung (3) und einer der Katalysatoranordnung vorgeschalteten Vorrichtung zur Bildung eines Reduktionsmittel-Abgas-Gemisches, **dadurch gekennzeichnet, daß** die Vorrichtung zur Bildung eines Reduktionsmittel-Abgas-Gemisches gemäß einem der Ansprüche 1 bis 3 ausgebildet ist.

## Claims

1. Device for forming a reducing agent/exhaust gas mixture, having a mixture-forming region (1), into which an exhaust gas and a reducing agent can be introduced, **characterized in that** the wall of the mixture-forming region (1) is at least partially designed with elevations and depressions, in particular corrugations, with the mixture-forming region provided being a pipe (1) which is designed at least in part as a corrugated pipe (1a).

2. Device according to Claim 1, **characterized in that** one end of the pipe (1) is arranged at the exhaust-gas outlet from a turbine (5a) of an exhaust-gas turbocharger (5).

3. Device according to one of the preceding claims, **characterized in that** the reducing agent is supplied by means of a spray pipe (2) designed with a spray head (2a), the spray head being positioned in particular in the centre of the pipe (1).

4. Exhaust gas purification system, in particular for a diesel engine, having a catalytic converter arrangement (3) and a device for forming a reducing agent/exhaust gas mixture connected upstream of the catalytic converter arrangement, **characterized in that** the device for forming a reducing agent/exhaust gas mixture is designed in accordance with one of Claims 1 to 3.

## Revendications

1. Dispositif pour la formation d'un mélange agent réducteur-gaz d'échappement comprenant une région de formation de mélange (1), dans laquelle un gaz d'échappement et un agent réducteur peuvent être introduits,
**caractérisé en ce que**
la paroi de la région de formation de mélange (1) est conformée au moins partiellement avec des protubérances et des creux, en particulier annelée, avec comme région de formation de mélange, un tube (1) constitué au moins partiellement par un tube annelé (1a).

2. Dispositif selon la revendication 1,
**caractérisé en ce qu'**
une extrémité du tube (1) est disposée à la sortie de gaz d'échappement d'une turbine (5a) d'un turbocompresseur sur gaz d'échappement (5).

3. Dispositif selon une des revendications précédentes,
**caractérisé en ce que**
l'amenée de l'agent réducteur s'effectue au moyen d'un tube de pulvérisation (2) équipé d'une tête de pulvérisation (2a), la tête de pulvérisation étant en particulier placée en position centrale dans le tube (1).

4. Installation d'épuration des gaz d'échappement, en particulier pour un moteur diesel, comprenant un dispositif catalyseur (3) et un dispositif pour la formation d'un mélange agent réducteur-gaz d'échappement, placé en amont du dispositif catalyseur,
**caractérisée en ce que**
le dispositif pour la formation d'un mélange agent réducteur-gaz d'échappement est réalisé conformément à l'une des revendications 1 à 3.
